# EUROPEAN PATENT APPLICATION

(11) **EP 2 615 019 A1**
(43) Date of publication of application: **17.07.2013**
(21) Application number: 12150911.1
(22) Date of filing: 12.01.2012
(51) Int. Cl.: B62K 19/16

(54) **Reinforced bicycle frame**

(71) Applicant: Yuan Min An Enterprise Co., Ltd., Taichung City 420 (TW)
(72) Inventor: YU, Kuo-Pin, 420 TAICHUNG CITY (TW)
(74) Representative: Becker Kurig Straus

(57) **Abstract**

A reinforced bicycle frame (10) is made from a fiber-reinforced material. The reinforced bicycle frame includes a head tube (11), a top tube (12) extending from the head tube, a down tube (13) extending from the head tube beneath the top tube, and at least one rib (14-19, 21, 31). The insides of the head, top and down tubes are communicated with each other in a way that the head, top and down tubes combinedly form a frame head (20) having an inner surface (201) defining a chamber (202). The rib has a connection end (171) connected with the inner surface (201) of the frame head (20) and a free end (172) located in the chamber (202), thereby enhancing the structural strength of the bicycle frame (10).

## Description

### BACKGROUND OF THE INVENTION

### 1. Field of the Invention

The present invention relates generally to bicycle frames, and more particularly, to a reinforced bicycle frame having a rib for enhancing a structural rigidity of a frame head of the reinforced bicycle frame.

### 2. Description of the Related Art

Conventional bicycle frames are generally made from a metal material, which have a strong structural strength but however a heavy weight. Because of the advantage of light weight, the bicycle frames made from carbon fiber-reinforced resins are comprehensively developed and extensively commercially used in recent years. The aforesaid bicycle frame comprises a head tube, a top tube, a down tube, a seat tube, two seat stays, two chain stays and a bottom bracket shell, wherein the insides of the head tube, a front section of the top tube and a front section of the down tube are communicated with each other such that a frame head is formed by the head, top and down tubes. The head tube is adapted for insertion by a steering tube having a top to which the handlebars attach and a bottom connected with a fork crown from which two blades downwardly extend. Each blade is provided at it bottom end with a fork end for holding an end of a front wheel axle.

When the bicyclist controls the handlebars for steering the bicycle and/or pulls the brake level to slow down or stop the bicycle during riding, the frame head may bear a stress of a certain degree, which may damage the structure of the frame head after the bicycle frame is used for a long time. In case the amount of the carbon fiber-reinforced resin used for making the bicycle frame is increased to build a relatively thicker wall of the frame head for enhancing the structural rigidity of the frame head, the total weight of the bicycle frame increases inevitably, resulting in that the bicyclist may have a strenuous bicycle riding. Therefore, the issue of how to take an optimum balance between the weight of the bicycle frame and the structural strength of the frame head needs to be solved in developing the bicycle frame.

### SUMMARY OF THE INVENTION

The present invention has been accomplished in view of the above-noted circumstances. It is therefore the primary objective of the present invention to provide a reinforced bicycle frame having a good structural strength with a light weight.

To achieve the above-mentioned objective, the reinforced bicycle frame provided by the present invention is made from a fiber-reinforced material and comprises a head tube, a top tube, a down tube and at least one rib. The top tube integrally and backwardly extends from the head tube, and the down tube integrally and backwardly extends from the head tube and is located beneath the top tube. Insides of the head, top and down tubes are communicated with each other in a way that the head, top and down tubes combinedly form a frame head having an inner surface, which is formed by inner surfaces of the head, top and down tubes, and a chamber defined by the inner surface of the frame head. The rib has a connection end connected with the inner surface of the frame head, and a free end remote from the connection end and located in the chamber.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a lateral elevation view of a reinforced bicycle frame according to a first preferred embodiment of the present invention;
FIG. 2 is a perspective view of a part of the reinforced bicycle frame of the first preferred embodiment of the present invention;
FIG. 3 is a schematic perspective view showing left and right halves of the part of the reinforced bicycle frame of FIG. 2;
FIG. 4 is a cross-sectional view of a part of a reinforced bicycle frame according to a second preferred embodiment of the present invention; and
FIG. 5 is a cross-sectional view of a part of a reinforced bicycle frame according to a third preferred embodiment of the present invention.

### DETAILED DESCRIPTION OF THE INVENTION

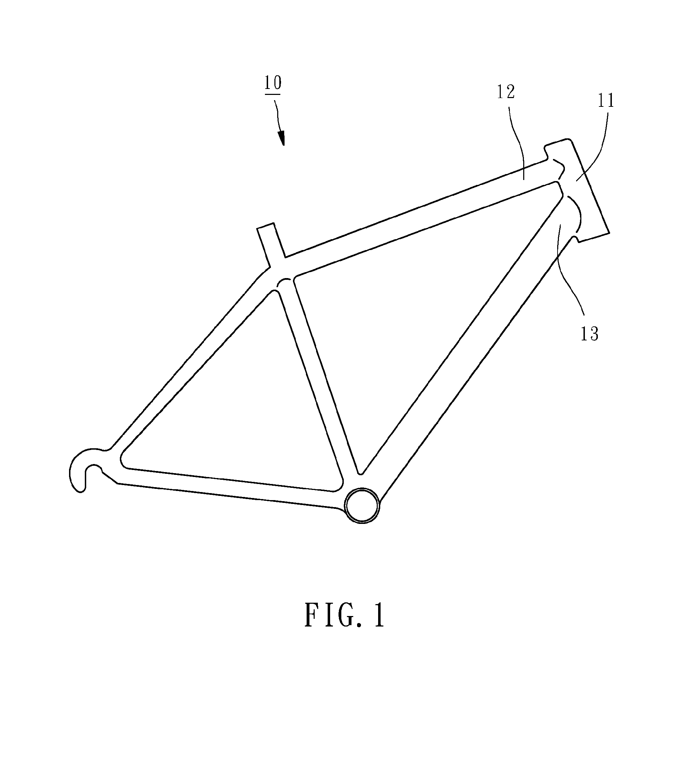

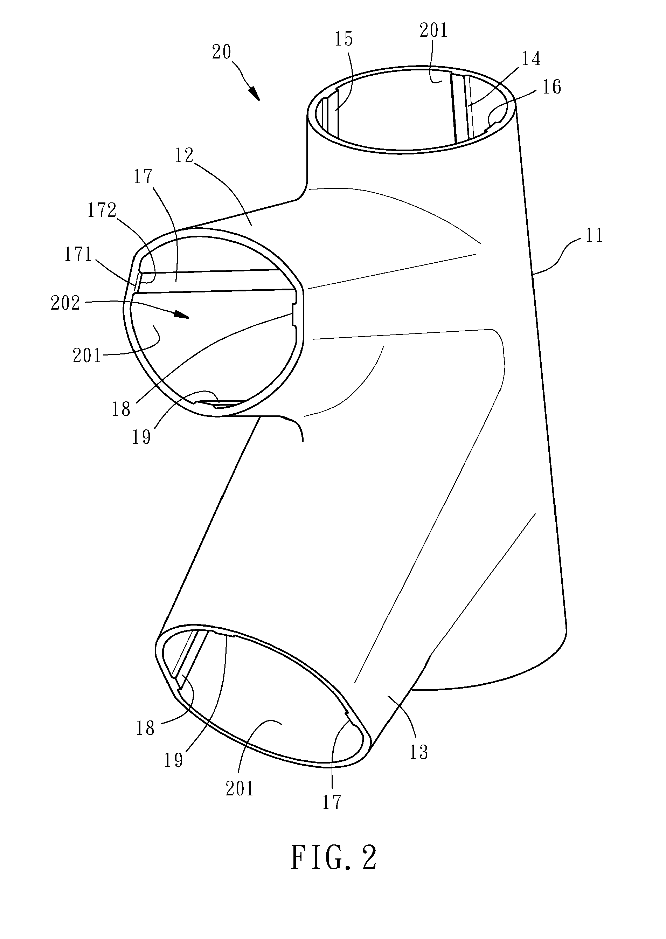

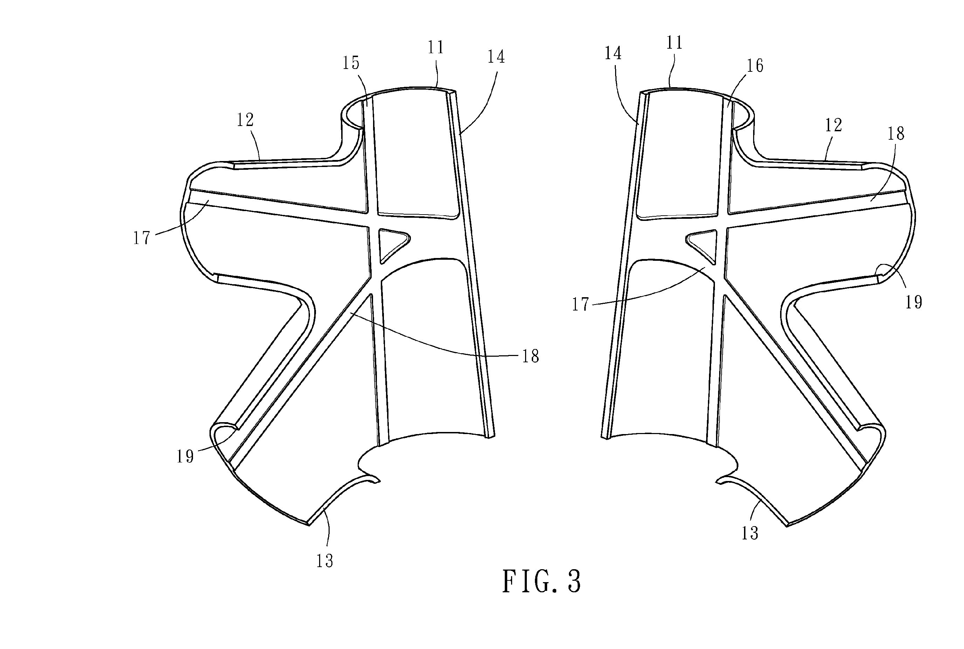

FIGS. 1-3 show a reinforced bicycle frame 10 configured according to a first preferred embodiment of the present invention. The reinforced bicycle frame 10 is made from a fiber-reinforced material, such as carbon fiber-reinforced resin. For the fiber used in the fiber-reinforced material, various kinds of fibers can be used, including but not limited to carbon fiber, boron fiber, glass fiber or Kevlar^{®} fiber. For the resin, thermoplastic or thermosetting resin can be used. As shown in the drawings, the reinforced bicycle frame 10 comprises a head tube 11, a top tube 12, a down tube 13 and six ribs, namely the first to sixth ribs 14, 15, 16, 17, 18 and 19 in this preferred embodiment.

The top tube 12 integrally and backwardly extends from the head tube 11. The down tube 13 integrally and backwardly extends from the head tube 11 and is located beneath the top tube 12. The insides of the head tube 11, the top tube 12 and the down tube 13 are communicated with each other, such that the head tube 11, the top tube 12 and the down tube 13 combinedly form a frame head 20. The frame head 20 has an inner surface 201, which is constructed by the inner surfaces of the head tube 11, top tube 12 and down tube 13, and a chamber 202 defined by the inner surface 201.

The ribs 14-19 each have a connection end and a free end remote from the connection end. Taking the forth rib 17 for example, the fourth rib 17 has a connection end 171 connected with the inner surface 201 of the frame head 20, and a free end 172, which is remote from the connection end 171 and is located in the chamber 202. In this preferred embodiment, the first rib 14 is located at a front portion of the head tube 11 and extends substantially along an axial direction of the head tube 11. It is be to mentioned that the front, rear, upper, bottom, left or right portion of an element used in this specification and the appendix drawings and claims is defined by a viewer located at a center of the element and facing the heading direction of the bicycle. Under this circumstance, it can be seen from the drawings that the second rib 15 and the third rib 16 are respectively located at a left portion and a right portion of the head tube 11 and both extend substantially along the axial direction of the head tube 11. In addition, the fourth rib 17 extends from a left portion of the top tube 12 through the head tube 11 to a right portion of the down tube 13. Further, the fifth rib 18 extends from a right portion of the top tube 12 through the head tube 11 to a left portion of the down tube 13. Furthermore, the sixth rib 19 extends from a bottom portion of the top tube 12 to an upper portion of the down tube 13. On the other hand, the first to sixth ribs 14 to 19 each have a rectangular crosssection with a relatively longer width and a relatively shorter height. However, the cross-sectional shapes of the first to sixth ribs 14 to 19 are not specifically limited. In other words, the first to sixth ribs 14 to 19 each may have a square, semicircular, semielliptical, triangular or trapezoidal crosssection.

The six ribs 14-19 can greatly enhance the structural strength of the bicycle frame 10, particularly the structural strength of the frame head 20 formed by the head tube 11, the top tube 12 and the bottom tube 13 while increasing the weight of the frame head 20 a little.

It should be understood that the reinforced bicycle frame 10 disclosed in the above-mentioned preferred embodiment is given for illustration of the essential technical features of the present invention only, not to limit the claim scope of the present invention. According to the technical features of the present invention, the reinforced bicycle frame of the present invention may be configured having any amount of the rib. In practice, at least one rib provided at the bicycle frame 10 is sufficient to enhance the structural strength of the bicycle frame 10. For example, the reinforced bicycle frame provided by the present invention may have one or more of the first to sixth ribs 14 to 19.

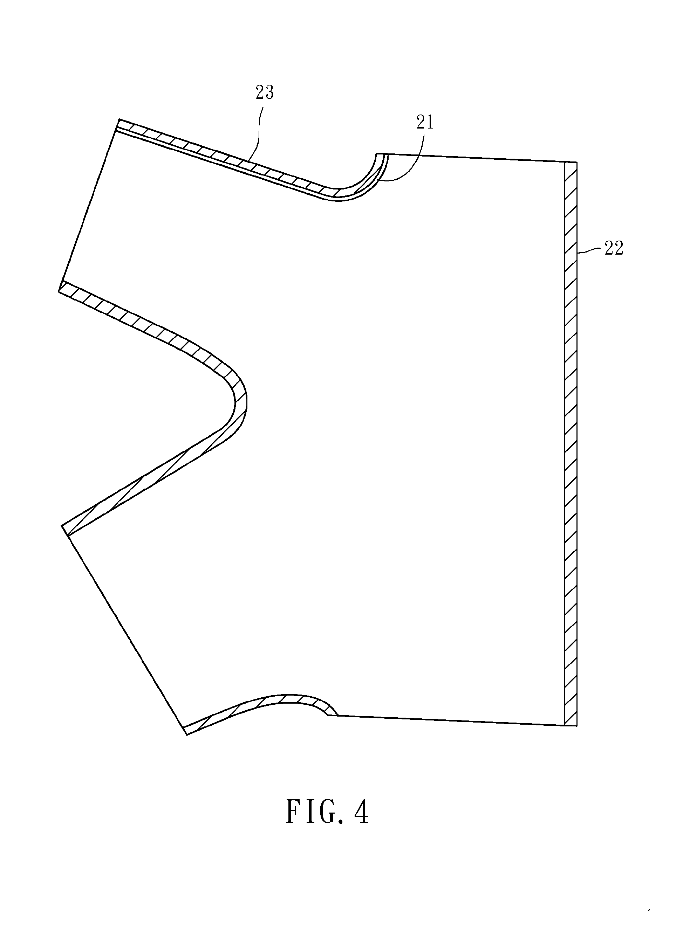

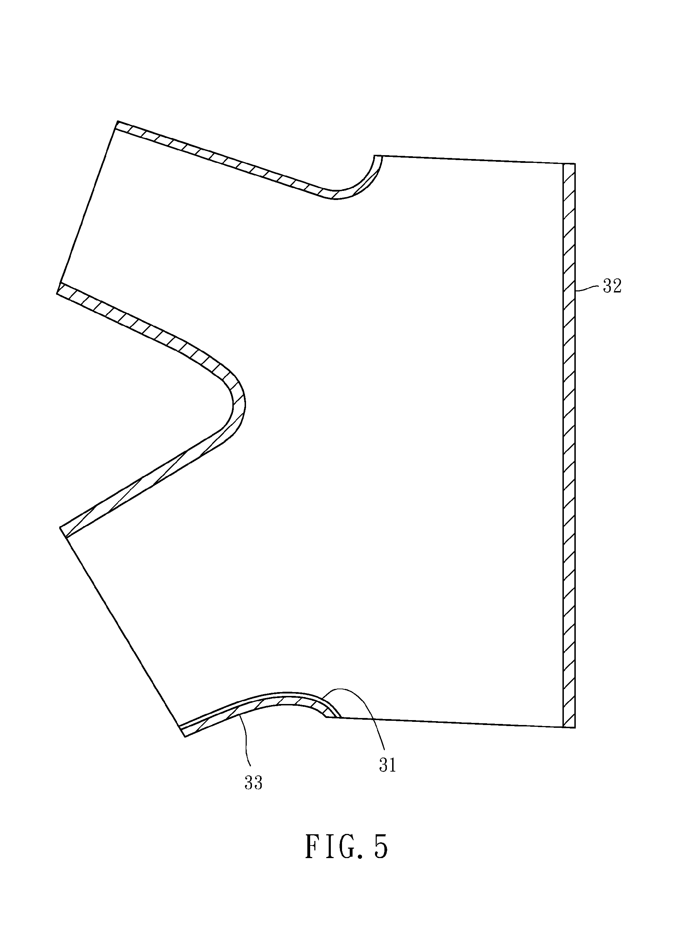

FIG. 4 illustrates a part of a reinforced bicycle frame according to a second preferred embodiment of the present invention. The reinforced bicycle frame comprises one rib 21 extending from a rear portion of the head tube 22 to an upper portion of the top tube 23. Besides, FIG. 5 illustrates a part of a reinforced bicycle frame according to a third preferred embodiment of the present invention. The reinforced bicycle frame comprises one rib 31 extending from a rear portion of the head tube 32 to a bottom portion of the down tube 33. It is to be understood that the frame head having any rib extending in any direction and having any length should be covered within the scope of the following claims.

## Claims

1. A reinforced bicycle frame (10) made from a fiber-reinforced material and **characterized in that** the reinforced bicycle frame comprises:
a head tube (11, 22, 32);
a top tube (12, 23) integrally and backwardly extending from the head tube (11);
a down tube (13, 33) integrally and backwardly extending from the head tube (11) beneath the top tube (12), wherein insides of the head, top and down tubes are communicated with each other in a way that the head, top and down tubes combinedly form a frame head (20) having an inner surface (201), which is formed by inner surfaces of the head, top and down tubes, and a chamber (202) defined by the inner surface (201) of the frame head (20); and
at least one rib (14-19, 21, 31) having a connection end (171) connected with the inner surface (201) of the frame head (20) and a free end (172) remote from the connection end and located in the chamber (202).

2. The reinforced bicycle frame of claim 1, **characterized in that** the reinforced bicycle frame comprises one said rib (14) located at a front portion of the head tube (11) and extending substantially along an axial direction of the head tube (11).

3. The reinforced bicycle frame of claim 1, **characterized in that** the reinforced bicycle frame comprises two said ribs (15, 16) respectively located at left and right portions of the head tube (11) and both extending substantially along an axial direction of the head tube(11).

4. The reinforced bicycle frame of claim 1, **characterized in that** the reinforced bicycle frame comprises one said rib (17) extending from a left portion of the top tube (12) through the head tube (11) to a right portion of the down tube (13).

5. The reinforced bicycle frame of claim 1, **characterized in that** the reinforced bicycle frame comprises one said rib (18) extending from a right portion of the top tube (12) through the head tube (11) to a left portion of the down tube (13).

6. The reinforced bicycle frame of claim 1, **characterized in that** the reinforced bicycle frame comprises one said rib (19) extending from a bottom portion of the top tube (12) to an upper portion of the down tube (13).

7. The reinforced bicycle frame of claim 1, **characterized in that** the reinforced bicycle frame comprises one said rib (21) extending from a rear portion of the head tube (22) to an upper portion of the top tube (23).

8. The reinforced bicycle frame of claim 1, **characterized in that** the reinforced bicycle frame comprises one said rib (31) extending from a rear portion of the head tube (32) to a bottom portion of the down tube (33).

9. The reinforced bicycle frame of claim 1, **characterized in that** the at least one rib comprises a first rib (14) located at a front portion of the head tube (11) and extending substantially along an axial direction of the head tube, a second rib (15) located at a left portion of the head tube (11) and extending substantially along the axial direction of the head tube, a third rib (16) located at a right portion of the head tube (11) and extending substantially along the axial direction of the head tube, a fourth rib (17) extending from a left portion of the top tube (12) through the head tube (11) to a right portion of the down tube (13), a fifth rib (18) extending from a right portion of the top tube (12) through the head tube (11) to a left portion of the down tube (13), and a sixth rib (19) extending from a bottom portion of the top tube (12) to an upper portion of the down tube (13).

## Amended claims

### Amended claims in accordance with Rule 137(2) EPC.

**1.** A reinforced bicycle frame (10) made from a fiber-reinforced material and **characterized in that** the reinforced bicycle frame comprises:
a head tube (11, 22, 32);
a top tube (12, 23) integrally and backwardly extending from the head tube (11), the top tube (12, 23) being composed of a left portion (121) and a right portion (122) integrally connected to the left portion (121);
a down tube (13, 33) integrally and backwardly extending from the head tube (11) beneath the top tube (12), the down tube (13, 33) being composed of a left portion (131) and a right portion (132) integrally connected to the left portion (131), wherein insides of the head, top and down tubes are communicated with each other in a way that the head, top and down tubes combinedly form a frame head (20) having an inner surface (201), which is formed by inner surfaces of the head, top and down tubes, and a chamber (202) defined by the inner surface (201) of the frame head (20); and
at least one rib (14-19, 21, 31) having a connection end (171) connected with the inner surface (201) of the frame head (20) and a free end (172) remote from the connection end and located in the chamber (202);
wherein at least one of said rib (17, 18) comprises a head tube portion (173, 183) integrally formed in the head tube (11) and two extension portions (174a, 174b, 184a, 184b) continuously extending from the head tube portion (173, 183) toward any two of the left and right portions (121, 122, 131, 132) of the top and down tubes (12, 13).

**2.** The reinforced bicycle frame of claim 1, **characterized in that** the reinforced bicycle frame comprises one said rib (14) located at a front portion of the head tube (11) and extending substantially along an axial direction of the head tube (11).

**3.** The reinforced bicycle frame of claim 1, **characterized in that** the reinforced bicycle frame comprises two said ribs (15, 16) respectively located at left and right portions of the head tube (11) and both extending substantially along an axial direction of the head tube(11).

**4.** The reinforced bicycle frame of claim 1, **characterized in that** the reinforced bicycle frame comprises one said rib (17) extending from a left portion (121) of the top tube (12) through the head tube (11) to a right portion (132) of the down tube (13).

**5.** The reinforced bicycle frame of claim 1, **characterized in that** the reinforced bicycle frame comprises one said rib (18) extending from a right portion (122) of the top tube (12) through the head tube (11) to a left portion (131) of the down tube (13).

**6.** The reinforced bicycle frame of claim 1, **characterized in that** the reinforced bicycle frame comprises one said rib (19) extending from a bottom portion of the top tube (12) to an upper portion of the down tube (13).

**7.** The reinforced bicycle frame of claim 1, **characterized in that** the reinforced bicycle frame comprises one said rib (21) extending from a rear portion of the head tube (22) to an upper portion of the top tube (23).

**8.** The reinforced bicycle frame of claim 1, **characterized in that** the reinforced bicycle frame comprises one said rib (31) extending from a rear portion of the head tube (32) to a bottom portion of the down tube (33).

**9.** The reinforced bicycle frame of claim 1, **characterized in that** the at least one rib comprises a first rib (14) located at a front portion of the head tube (11) and extending substantially along an axial direction of the head tube, a second rib (15) located at a left portion of the head tube (11) and extending substantially along the axial direction of the head tube, a third rib (16) located at a right portion of the head tube (11) and extending substantially along the axial direction of the head tube, a fourth rib (17) extending from a left portion (121) of the top tube (12) through the head tube (11) to a right portion (132) of the down tube (13), a fifth rib (18) extending from a right portion (122) of the top tube (12) through the head tube (11) to a left portion (131) of the down tube (13), and a sixth rib (19) extending from a bottom portion of the top tube (12) to an upper portion of the down tube (13).
